# EUROPEAN PATENT APPLICATION

(11) **EP 2 693 374 A1**
(43) Date of publication of application: **05.02.2014**
(21) Application number: 12360052.0
(22) Date of filing: 02.08.2012
(51) Int. Cl.: G06N 5/02

(54) **Relationship establishment**

(71) Applicant: Alcatel Lucent, 75007 Paris (FR)
(72) Inventor: Bedini, Ivan, Dublin, Dublin 15 (IE); Emmerich, Neil, Bracknell, Berkshire RG42 3XA (GB); Robbertze, Max, Reading, Berkshire RG4 8AL (GB)
(74) Representative: Script IP Limited

(57) **Abstract**

A method of establishing enablers of a relationship between a first entity and a second entity, a computer program product and relationship establishment unit operable to perform that method. The method comprises: determining a set of indications of primary relationship characteristics to define a generic relationship between the first entity and the second entity; expressing primary first entity relationship requirements and primary second entity relationship requirements in terms of the indications of primary relationship characteristics: assessing, based on common indications of primary relationship characteristics, whether commonality between the primary first entity relationship requirements and primary second entity relationship requirements passes a preselected threshold; and, if so, establishing enablers of a relationship between the first entity and said second entity based on the common indications of primary relationship characteristics.

## Description

### FIELD OF THE INVENTION

The present invention relates to a method of establishing enablers of a relationship between a first entity and a second entity, a computer program product and relationship establishment unit operable to perform that method.

### BACKGROUND

In various real life scenarios, entities exist which wish to establish operational relationships with other entities, subject to particular rules and restrictions. For example, network nodes within a wireless telecommunications network may wish to communicate with other network nodes within a telecommunications network, but those relationships may be restricted by various characteristics associated with each network node or with links between those network nodes. Similarly, it may be required to match a product or piece of operational hardware to a particular function desired at a particular point, subject to various restrictions, and, furthermore, it may be desired to match parties wishing to form contracts or to ensure the smooth running of logistics between two entities.

Such relationships between entities may be particularly complicated and the restrictions and parameters of the relationships may be difficult to reconcile efficiently.

Aspects aim to provide a means to match entities wishing to form an operational relationship therebetween.

### SUMMARY

The first aspect provides a method of establishing enablers of a relationship between a first entity and a second entity, the method comprising: determining a set of indications of primary relationship characteristics to define a generic relationship between the first entity and the second entity; expressing primary first entity relationship requirements and primary second entity relationship requirements in terms of said indications of primary relationship characteristics; assessing, based on common indications of primary relationship characteristics, whether commonality between said primary first entity relationship requirements and primary second entity relationship requirements passes a preselected threshold; and, if so, establishing enablers of a relationship between said first entity and said second entity based on said common indications of primary relationship characteristics.

The first aspect recognises that there may be no common language between a first entity and a second entity, despite their wishing to form a relationship. By determining a set of indications of primary relationship characteristics which can be used to define a generic relationship between a first entity and a second entity in a given field, it is possible to reduce the requirements of each entity to a common language and thereby find commonality between those entities such that it is possible to identify entities which may be well suited to form a relationship.

Furthermore, by establishing a common language and by determining whether a predetermined level of commonality can be established, associated operational parameters, also referred to as "enablers" of a relationship between the first and second entity may be established.

It will be appreciated that when determining a degree of commonality, a degree of overlap of a shared set of requirements for a relationship may be identified. In different implementations of aspects described herein a required commonality threshold may differ. For example, the threshold implemented in some embodiments may be a requirement for only a proportion of primary relationship characteristics to be the same, may require an identical match in respect of one or more primary relationship characteristics, or an identical match in respect of all primary relationship characteristics.

In one embodiment, the first and second entities comprise different types of entity. It will be understood that the general properties of the first entity may differ from that of the second entity. For example, the first entity may comprise a transmitter and the second entity may comprise a receiver. Similarly, the first entity may comprise a provider and the second entity may comprise some kind of user. Thus, it will be understood that primary relationship characteristics associated with each of the first and second entities may be expressed in apparently contradictory terms and that by finding a common language in accordance with the first aspect, relationships or links between the first and second entities can be more easily identified.

According to one embodiment, the relationship between the entities comprises a reciprocal relationship. According to some embodiments, the relationship is asymmetrical, the relationship may comprise a producer-consumer relationship or a master-slave relationship. Nonetheless, a method according to the first aspect offers a means to match characteristics desired by nodes or entities.

In one embodiment, the method comprises assessing commonality based on common indications of primary relationship characteristics for a plurality of the first and second entities, to identify a set of first and second entities between which relationships may be successfully established. Accordingly, the method may be applied between simply two entities or may be carried out between a plurality of entities to establish those which may be suited to the formation of a relationship therebetween.

According to one embodiment, the determination of the set of indications comprises establishing a database of domain-based relationship parameters. Accordingly, the set of indications of primary relationship characteristics may depend upon the particular domain within which the first and second entities operate. That is to say, different parameters and indications may be used in different scenarios. For example, in a wireless telecommunications network, the relationship parameters may comprise an indication of functionality provided by each entity, the nature of means of communication between each entity and similar. In a content provider and content owner scenario, the relationship parameters may comprise indications of the technological nature of material to be provided, for example, the format of the material, and the technology available to process that material.

According to one embodiment, the expression of entity relationship requirements comprises analysing a set of preferred enablers associated with each entity to determine how those enablers are expressed using the indications of primary relationship characteristics. That is to say, the common language or generic relationship language established, according to the first aspect, may require some analysis and re-expression of entity relationship requirements such that an assessment of commonality may be made.

According to one embodiment, the method further comprises determining a set of indications of secondary relationship characteristics to further define a primary relationship having a commonality past a predetermined threshold between the first entity and the second entity; expressing secondary first entity relationship requirements and secondary second entity relationship requirements in terms of the indications of secondary relationship characteristics; and assessing, based on common indications of secondary relationship characteristics, whether commonality between secondary first entity relationship requirements and secondary second entity relationship requirements passes a preselected threshold and, if so, establishing enablers of a relationship between the first entity and the second entity based on the common indications of primary and secondary relationship characteristics.

Accordingly, a method may be provided where a course filter is provided by primary relationship requirements, and the nature of the relationship established between a first and second entity may be further refined by secondary relationship characteristics. Those secondary relationship characteristics again form a common language between entities where no common language may previously have existed.

According to one embodiment, the method further comprises determining a set of indications of primary relationship characteristics by defining a set of domain specific atomic concepts. Accordingly, the characteristics may be broken down into very small units such that a commonality between requirements of entities can be most easily identified.

According to one embodiment, the domain specific atomic concepts comprise one or more of entity characteristics and/or relationship characteristics. It will be appreciated that various other characteristics may be reduced to domain specific atomic concepts, and may, for example, include content characteristics or commodity characteristics.

According to one embodiment, the method further comprises analysing operation of the established relationship and reconciling the operation with the enablers. Accordingly, once a relationship is established between entities, it is possible to continuously or periodically analyse that relationship to ensure it operates according to originally configured relationship parameters or enablers. That is to say, it is possible to use an established relationship as a verification application and constantly verify the nature of a relationship occurring between first and second entities.

A second aspect provides a computer program product operable, when executed on a computer, to perform the method of the first aspect.

A third aspect provides a relationship establishment unit operable to establish enablers of a relationship between a first entity and a second entity, the unit comprising: determination logic operable to determine a set of indications of primary relationship characteristics to define a generic relationship between the first entity and the second entity; expression logic operable to express primary first entity relationship requirements and primary second entity relationship requirements in terms of the indications of primary relationship characteristics; assessment logic operable to assess, based on common indications of primary relationship characteristics, whether commonality between the primary first entity relationship requirements and primary second entity relationship requirements passes a preselected threshold; and, if so, establishment logic operable to establish enablers of a relationship between the first entity and the second entity based on the common indications of primary relationship characteristics.

In one embodiment, the first and second entities comprise different types of entity.

In one embodiment, the relationship between the entities comprises a reciprocal relationship.

In one embodiment, the unit further comprises an assessment unit operable to assess commonality based on common indications of primary relationship characteristics for a plurality of the first and second entities to identify a set of first and second entities between which relationships may be successfully established.

According to one embodiment, the determination logic is operable to determine the set of indications by establishing a database of domain-based relationship parameters.

According to one embodiment, the expression logic is operable to express entity relationship requirements by analysing a set of preferred enablers associated with each entity to determine how those enablers are expressed using the indications of primary relationship characteristics.

According to one embodiment, the unit further comprises determination logic operable to determine a set of indications of secondary relationship characteristics to further define a primary relationship having a commonality past a predetermined threshold between a first entity and a second entity; expression logic operable to express secondary first entity relationship requirements and secondary second entity relationship requirements in terms of the indications of secondary relationship characteristics; assessment logic operable to assess, based on common indications of secondary relationship characteristics, whether commonality between the secondary first entity relationship requirements and secondary second entity relationship requirements passes a preselected threshold and, if so, establishment logic operable to establish enablers of a relationship between the first entity and the second entity based on the common indications of primary and secondary relationship characteristics.

According to one embodiment, the determination logic is operable to determine a set of indications of primary relationship characteristics which define a set of domain specific atomic concepts.

According to one embodiment, the domain specific atomic concepts comprise one or more of: entity characteristics, relationship characteristics.

According to one embodiment, the unit further comprises analysis logic operable to analyse operation of the established relationship and reconcile that operation with the operational parameters.

Further particular and preferred aspects are set out in the accompanying independent and dependent claims. Features of the dependent claims may be combined with the features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Figure 1 illustrates schematically a method of determining the parameters of a verification application according to one embodiment; and
Figure 2 illustrates schematically an architecture for creating a verification application according to one embodiment.

### DESCRIPTION OF THE EMBODIMENTS

### OVERVIEW

Before discussing embodiments in any more detail, first an overview will be provided. Aspects provide a means of creating rules and associations according to which a verification application may operate. According to one aspect, the verification application may be used to verify content usage and may provide a means to allow a content provider to access verified content usage information.

It will be appreciated that content may be used in various ways and according to various pre-set or pre-configured rules and associations defined between two entities, for example, a content provider and content owner. Aspects may allow, for example, the modelling and automation of licence agreements for content, where the licence agreement concepts, associations and rules for interactions are predefined for one or more providers or content owners. Those rules and concepts may be tailored to meet specific requirements set by individual entities or may supplement general rules with more specific, entity-specific or field-specific rules.

Aspects recognise that it is important to use a specific modelling technology, rather than a more common domain modelling methodology, such that a system can support creation of a shared set of rules between entities subject to associations and so as to create a verification application which is operable to verify, for example, content use, despite various issues which may be encountered when initially configuring the rules and associations required to create the verification application. That is to say, the verification application may take into account concepts and rules which may be defined without detailed technical knowledge of the particular modelling technology employed by the verification application; automatic filtering and matching may be achieved between entities, for example, a content provider and a content owner and verification of rules agreed between entities can be verified by the verification application.

Furthermore, a verification application may be such that it is operable to allow automated reconciliation and reporting after initiation of execution of agreements or a set of rules between entities. That set of rules may be derivable from an initial model defined as part of a set of initial verification rules.

In an embodiment where content is owned by one entity and supplied by another, execution of the verification application may trigger generation of necessary control parameters for physical processes that form part of the content usage to be verified.

Aspects defined may involve capture of multiple data points by users via a natural integration of context dependency in a language. Each party may have a different background and meaning interpretation in relation to a particular atomic concept. What is natural for one entity can be different for another entity. By reducing relationship characteristics to a set of atomic concepts, a natural way of interacting with data utilising semantic-based technologies can be provided. What information is gathered and how such information is related and processed to achieve a goal forms the basis of creation of a given verification application.

It will be appreciated that some aspects may provide a subset of functionality described herein. Functionality for describing the nature of content, and rules set between entities, for example, providing nodes and content owner nodes within a network, may exist typically for the purposes of rights enforcement, usage optimisation, negotiation and reconciliation. However, aspects described herein are such that rules and terms are not necessarily limited to Boolean combinations of hard coded rules in order to build a verification application. Furthermore, existing methods may be such that in relation to some rules set between providing and owning nodes, there may be no match and filtering rules which operate to direct created rules, associations and constraints to be applied between potentially linkable entities.

It will be appreciated that by forming a link, in the form of a verification application, on initiation of a defined relationship between entities, for example, a content-owning node and a providing node, there is no need to manually code reconciliation logic between those two nodes. That is to say, a verification application forms the basis for a relationship between two entities and is operable to check operational characteristics of that relationship. That checking process, or verification of a defined relationship, may be continuous, dynamic or occur periodically.

According to aspects described, a predefined subset of rules, relating to a particular field of technology, is defined. That limited number of rules or agreement terms can be extracted from a complete knowledge base of a particular domain and may typically be defined initially by a domain expert in formal terms.

In order to achieve a domain specific expert formalization of a preset number of rules, the domain expert may be provided with a tool which, even though formulated in terms easy for the expert to understand, is able to extract the main terms needed for establishment of a common set of rules agreed between entities, for example, a content provider and a content owner.

It will be appreciated that by abstracting and reducing the number of possible rules to a predefined set of allowable rules, negotiation between entities, for example, a content-owner and a provider node to provide a mutually agreeable relationship therebetween can result in the creation of a verification application. Creation of a verification application which can define a relationship between entities becomes the matter of matching a shorter list of elements which are important to each of the entities linked by the relationship defined by the verification application. Reconciliation of an operational link between entities can be more simply reconciled by the verification application.

It will further be appreciated that aspects provide, in some embodiments, domain experts with the ability to freely express their knowledge in a form that is more applicable to their competences and habits, yet allows a set of rules to operate on a limited number of concepts essential for a given relationship set by a resulting verification application to be agreed between two entities, for example, a content owner and a content provider. The limited number of concepts may be mapped to a common set of elements naturally derived by a system and proposed or selected from presets to entities, for example, a content owner and a content provider.

Using ontologies may simplify technical issues to provide semantic mappings between similar terms that, when expressed through words are unclear, but which can be semantically captured and mapped by the system in order to build a verification application by virtue of similar properties or similar associations. Various logic structures may be required in order to be able to obtain a suitable verification occasion.

Aspects and embodiments may require the following components:
Core vocabulary logic or a set of core vocabulary logic operable to define basic or primitive concepts in relation to each of the following:
   - Concepts used in identification, search and filtering of participating entities, in relation to agreeing a mutually agreeable link, for the purposes of creating a verification application.
   - Concepts used in defining verification application relationships including: verification conditions and associated tracking and reconciliation of activity and operational parameters in terms of a verification relationship.
   - An ontology defining "atomic" concepts shared by the above-mentioned ontologies. By atomic, it is meant the most basic concepts shared by the rules and associations used to form the two preceding ontologies.
Rule engine logic operable to provide a set of rules aligned with the core vocabulary logic;
A customisable ontological model and associated editing tool which allows non-technical domain experts to define terms and conditions as well as reconciliation and verification parameters for any given participating entity in terms of ontology bases described by core vocabulary logic:
An inventory, for example, described in terms of a relevant metadata model, of created relationships between entities defined by verification applications existing in a system. It will be understood that metadata can be ontological or of a classic relational form;

Ontological description of rules and constraints and user interface logic operable to provide a layer based on semantic querying and reasoning technologies, such as SPARQL and OWL reasoners, operable to enable interaction of a defined semantic system (based on a core vocabulary logic, rule engine and customisable ontological model) between entities and associated entity datasets for the purpose of one or more of the following:
- Matching of entities, for example, providing and content-owning network nodes and available content;
- Selecting or generating or displaying verification application conditions supported by given entities, for example, providing network node or content-owning network nodes;
- Filtering visibility of information and rules between entities, for example, a content-owning network node and a providing network node to allow generation of a verification application;
- Finalising, accepting or concluding formation of a verification application forming an agreeable relationship between entities;
- Displaying and searching verification application rules;
- Selecting verification application rules suitable for one or more entities, for example a set of providing network nodes and/or content-owning network nodes;
- Generation of physical control parameters to execute a verification application, for example, manifest files or schedules or other similar parameters and data;
- Automated reconciliation and verification offered by the verification application in terms of verification rules and usage data gathered from an entity, for example, a providing network node.

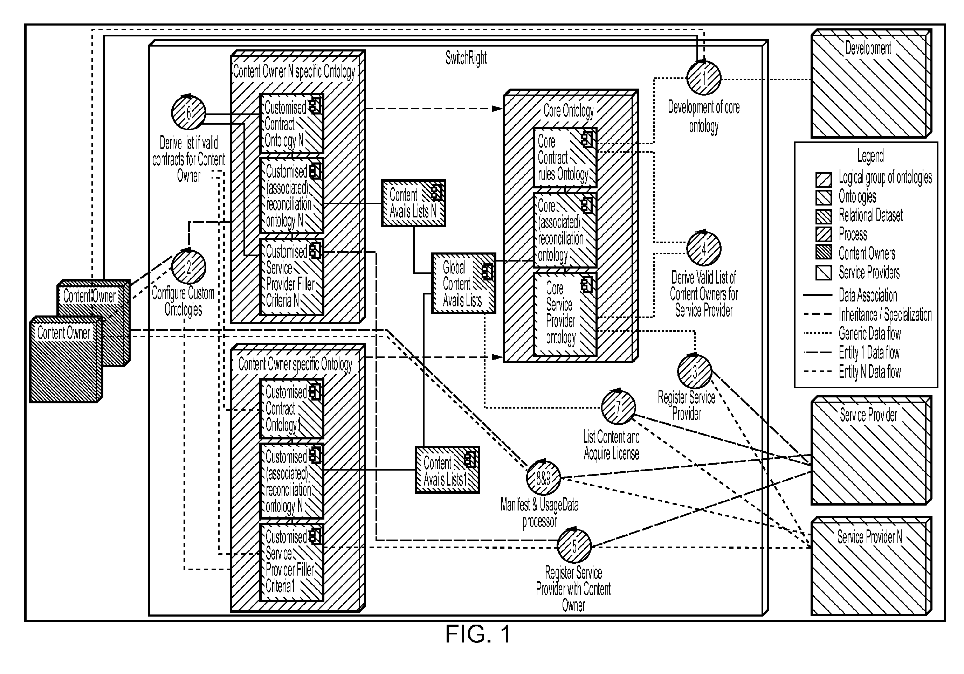

Figure 1 illustrates schematically an embodiment of one process allowing for automatic generation of a relationship between entities, the relationship also forming a verification application. In the illustrated embodiment, content is managed based on an automatically generated verification application.

Figure 1 shows a system formed by creating (step S1) a core ontology as part of system development. That creation step typically requires input from a domain expert.

A first type of entity, in this case, a content owner extends (step S2) a standard ontology by adding rules to those based on the core ontology formed as part of step S1. The first type of entity is further operable to and specify filter criteria for possible relationship with a second type of entity, in the illustrated embodiment, service providers.

Second type entities, in this case, service providers register (step S3) with the system, and, in this embodiment, complete information requests to provide information to the system to allow an analysis to be made of possible relationships which may be established between first and second entity types.

Registered service providers (second type entities) can browse (step S4) the system for content providers (first type entities) to establish a link, for example, licence agreement, with. Only content providers that are pertinent to them will be returned to them.

As a result of a match identified by entities by the system, a service provider is operable to establish a link with a particular content owner. Establishment of a link may, in some embodiments, require that the service provider or content provider provides further information to the other entity.

Based on core and additional data exchanged between entities, for example, a service provider and content provider, a list of valid verification applications or relationships, in the form of license agreements, for a given service provider may be calculated. In this embodiment, those possible relationships are presented to a service provider for acceptance.

In this illustrative embodiment, the service provider browses the list of content available from a content owner. Content availability is filtered based on relationships, for example, license agreements entered into by the owning entities. In this embodiment, content may browsed per platform and region. The service provider may be operable to select content from the availability list. Some implementations may allow for a real-time personalisable view of a list of available content data. The personalisation may be dependent upon a primary and/or secondary relationship requirements identified by each entity. Aspects allow for automatic calculation of a personalised view coherent with interests and interpretation of a requesting party, that view being a visual representation of the primary and/or secondary relationship requirements set by each entity.

Once negotiations between entities are complete, the system is operable to generate content processing and delivery manifests and schedules based on an agreed relationship, also known as a verification application.

Based on the usage data received from the service provider (in canonical form) and the license agreement terms defined by content owner, the system may be operable to automatically calculate and generate a royalty report for settlement between the content owner and service provider. It will be appreciated that the reconciliation data may be provided in non-canonical form, but that in order for automatic calculation and generation of a royalty report for settlement it may be necessary to transform provided data into a canonical format.

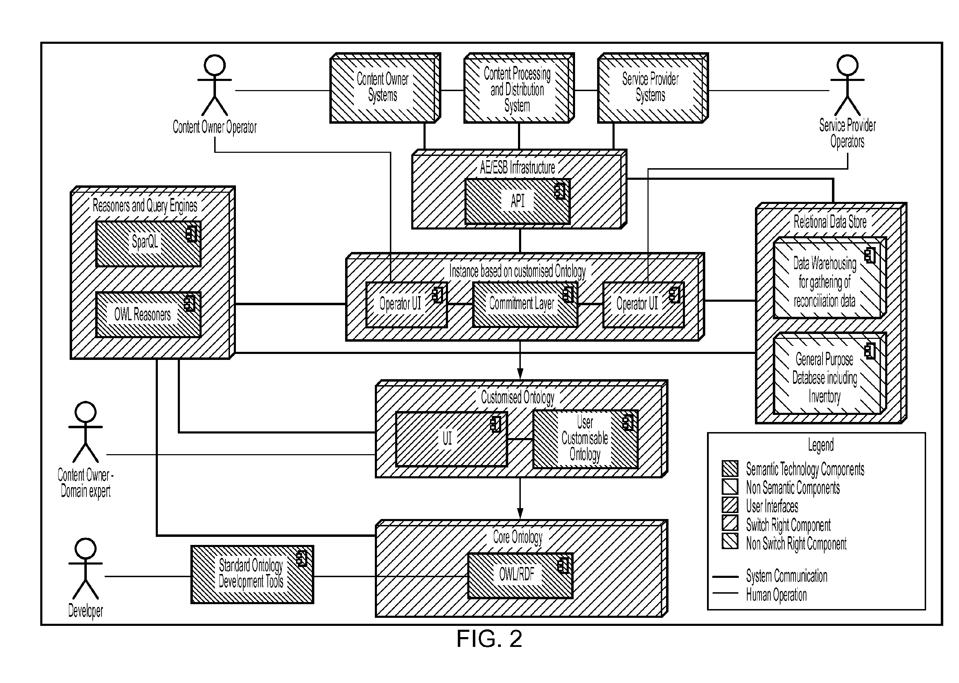

Figure 2 illustrates schematically principles of aspects and embodiments may be applied.

Basic concepts and relationships associated with entities, in this case, content owners and service providers, for example: licensed services, content items, license rights and license agreements used in media licensing, are defined by developers and form the basis of a core ontology. These concepts are described in RDF & OWL using a semantic ontology editor and knowledge acquisition development tool.

A domain expert uses the tools provided as part of the system to create customised descriptions of the terms and conditions for a particular entity, for example, content owner. A user interface hides any complexity associated with underlying technology, which, for example, can be based on standards like RDF & OWL, and may include other semantic modelling paradigms such as DOGMA.

In the illustrative embodiment of Figure 2, an RDBMS database is used to store content metadata and/or item inventory as well as reconciliation data.

Interfacing infrastructure is provided to allow for: automation of an inventory population from a content owner's content management system; distribution of a content processing and delivery manifest and schedule details to content processing and distribution system; and acquisition of usage data for reconciliation purposes.

Semantic query tools operating on an ontological datastore (such as OWL reasoners and SparQL queries) can be used in some embodiments in combination with non-semantic coding techniques (such as Java & SQL) to implement various functions, including, for example: automation of the system to match entities, for example, service providers with content owners based on semantic similarities; generation of term sheets for license agreements that may be entered into by entities; generation of content processing and delivery manifests for distribution and content processing systems; a user interface to be used by content owner operators responsible for monitoring the progress of individual transactions and dealing with any exception raised; a user interface for service provider operators responsible for registering with content owners and making content selections; deriving and executing logic that can be executed to calculate reconciliation reports.

It will be appreciated that the system may provide, in some embodiments, an entity, for example, a licensor, with flexibility to model in detail a verification application, for example, license agreement and license rights rules for each other type of entity with which a relationship might be established, for example, preferred parameters in relation to: a licensee, licensed service and region.

A system may be operable to automatically match licensees with licensors who are willing to do business with them, based on the rules defined by the licensor.

A system may be operable to automate generation of physical parameters governing processes that comprise part of execution of a license agreement, for example, manifests or schedules.

The system may be operable to automate reconciliation of rights usage, by deriving required logic for reconciliation from rules defined by a licensor, and applying that logic to usage data acquired from a licensee via usage APIs.

The system may be operable to automate a negotiation process between entities and allows a first set of entities to have control over creation of terms and conditions for agreement with a second set of entities. It will be appreciated that aspects may allow smaller licensor and licensees to effectively reach a license agreement with multiple licensees and licensors respectively.

Semantic technology is being applied in ever widening fields. It is a matter of time until its widespread advent in the fields of legal, contractual and content processing. It is thus anticipated that schemes such as these will be widely used.

It will be appreciated that a person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of establishing enablers of a relationship between a first entity and a second entity, said method comprising:
determining a set of indications of primary relationship characteristics to define a generic relationship between said first entity and said second entity;
expressing primary first entity relationship requirements and primary second entity relationship requirements in terms of said indications of primary relationship characteristics;
assessing, based on common indications of primary relationship characteristics, whether commonality between said primary first entity relationship requirements and primary second entity relationship requirements passes a preselected threshold; and, if so,
establishing enablers of a relationship between said first entity and said second entity based on said common indications of primary relationship characteristics.

2. A method according to claim 1, wherein said first and second entities comprise a different type of entity.

3. A method according to claim 1 or claim 2, wherein said relationship between said entities comprises a reciprocal relationship.

4. A method according to any preceding claims, wherein said method comprises assessing commonality based on common indications of primary relationship characteristics for a plurality of said first and second entities, to identify a set of first and second entities between which relationships may be successfully established.

5. A method according to any preceding claim, wherein said determination of said set of indications comprises establishing a database of domain-based relationship parameters.

6. A method according to any preceding claim, wherein said expressing of entity relationship requirements comprises analysing a set of preferred operational parameters associated with each entity to determine how those operational parameters are expressed using said indications of primary relationship characteristics.

7. A method according to any preceding claim, further comprising: determining a set of indications of secondary relationship characteristics to further define a primary relationship having a commonality past a predetermined threshold between said first entity and said second entity;
expressing secondary first entity relationship requirements and secondary second entity relationship requirements in terms of said indications of secondary relationship characteristics;
assessing, based on common indications of secondary relationship characteristics, whether commonality between said secondary first entity relationship requirements and secondary second entity relationship requirements passes a preselected threshold; and, if so,
establishing enablers of a relationship between said first entity and said second entity based on said common indications of primary and secondary relationship characteristics.

8. A method according to any preceding claim, wherein determining a set of indications of primary relationship characteristics comprises defining a set of domain specific atomic concepts.

9. A method according to claim 8, wherein said domain specific atomic concepts comprise one or more of: entity characteristics, relationship characteristics.

10. A method according to any preceding claim, further comprising:
analysing operation of said established relationship and reconciling said operation with saidenablers.

11. A computer program product operable, when executed on a computer, to perform the method of any one of claims 1 to 10.

12. A relationship establishment unit operable to establish enablers of a relationship between a first entity and a second entity, said unit comprising:
determination logic operable to determine a set of indications of primary relationship characteristics to define a generic relationship between said first entity and said second entity;
expression logic operable to express primary first entity relationship requirements and primary second entity relationship requirements in terms of said indications of primary relationship characteristics;
assessment logic operable to assess, based on common indications of primary relationship characteristics, whether commonality between said primary first entity relationship requirements and primary second entity relationship requirements passes a preselected threshold; and, if so,
establishment logic operable to establish enablers of a relationship between said first entity and said second entity based on said common indications of primary relationship characteristics.

## Amended claims

### Amended claims in accordance with Rule 137(2) EPC.

**1.** A method of establishing operational parameters of a relationship between a first entity and a second entity, said method comprising:
determining a common language comprising a set of indications of primary relationship characteristics which can be used to define a generic relationship between a first entity and a second entity;
expressing relationship requirements of said first entity and relationship requirements of said second entity in terms of said common language, wherein expressing relationship requirements of said first and second entity comprises analysing a set of preferred operational parameters associated with each entity to determine how those operational parameters are expressed using said common language;
assessing, based on common relationship requirements of said first and second entity expressed in said common language, whether overlap between said first entity relationship requirements and second entity relationship requirements passes a preselected threshold; and, if so,
establishing operational parameters of a relationship between said first entity and said second entity based on said common relationship requirements.

**2.** A method according to claim 1, wherein said first and second entities comprise a different type of entity.

**3.** A method according to claim 1 or claim 2, wherein said relationship between said entities comprises a reciprocal relationship.

**4.** A method according to any preceding claims, wherein said method comprises assessing overlap based on common indications of relationship requirements for a plurality of said first and second entities, to identify a set of first and second entities between which relationships may be successfully established.

**5.** A method according to any preceding claim, wherein said determination of said common language comprises establishing a database of domain-based relationship parameters.

**6.** A method according to any preceding claim, further comprising: determining a further common language comprising a set of indications of secondary relationship characteristics to further define a relationship having an overlap assessed to be past a predetermined threshold between said first entity and said second entity;
expressing secondary relationship requirements of said first entity and secondary relationship requirements of said second entity in terms of said further common language;
assessing, based on common secondary relationship requirements of said first and second entity, expressed in said further common language, whether overlap between said secondary relationship requirements of said first entity and secondary relationship requirements of said second entity passes a preselected threshold; and, if so, establishing operational parameters of a relationship between said first entity and said second entity based on said secondary relationship requirements.

**7.** A method according to any preceding claim, wherein determining a set of indications of primary relationship characteristics comprises defining a set of domain specific atomic concepts.

**8.** A method according to claim 7, wherein said domain specific atomic concepts comprise one or more of: entity characteristics, relationship characteristics.

**9.** A method according to any preceding claim, further comprising:
analysing operation of said established relationship and reconciling said operation with said enablers.

**10.** A computer program product operable, when executed on a computer, to perform the method of any one of claims 1 to 9.

**11.** A relationship establishment unit operable to establish operational parameters of a relationship between a first entity and a second entity, said unit comprising:
determination logic operable to determine common language comprising a set of indications of primary relationship characteristics which can be used to define a generic relationship between a first entity and a second entity;
expression logic operable to express relationship requirements of said first entity and relationship requirements of said second entity in terms of said common language, wherein expressing relationship requirements of said first and second entity comprises analysing a set of preferred operational parameters associated with each entity to determine how those operational parameters are expressed using said common language;
assessment logic operable to assess, based on common relationship requirements of said first and second entity expressed in said common language, whether overlap between said first entity relationship requirements and said second entity relationship requirements passes a preselected threshold; and, if so,
establishment logic operable to establish operational parameters of a relationship between said first entity and said second entity based on said common relationship requirements.
